# EUROPEAN PATENT APPLICATION

(11) **EP 2 985 215 A1**
(43) Date of publication of application: **17.02.2016**
(21) Application number: 15165153.6
(22) Date of filing: 27.04.2015
(51) Int. Cl.: B62K 25/00, B62J 99/00

(54) **APPARATUS FOR DETECTING RIDING POSTURE**

(30) Priority: 13.08.2014 TW 103127773
(71) Applicant: Giant Manufacturing Co., Ltd., 43774 Taichung Hsien (TW)
(72) Inventor: Lin, Chung-Wei, 436 Taichung City (TW); Chen, Min-Chang, 437 Taichung City (TW)
(74) Representative: Becker Kurig Straus

(57) **Abstract**

An apparatus for detecting a riding posture is suitable for detecting a riding posture of a rider riding a bicycle. The apparatus for detecting a riding posture includes a sensor and a controller. The sensor is connected to the bicycle to sense a relationship between the rider and the bicycle and output a sensing signal accordingly. The controller receives the sensing signal and determines whether the riding posture of the rider is a sitting posture or a standing posture according to the sensing signal.

## Description

### BACKGROUND

### 1. Field of the Invention

The invention relates to a bicycle, and particularly relates to an apparatus for detecting a riding posture applicable to a bicycle.

### 2. Description of Related Art

When riding a bicycle having shock absorbers, a rider may adopt a sitting posture or a standing posture to ride the bicycle according to different pavements. The two riding postures result in different overall centers of gravity of the bicycle. To optimize pedalling efficiency and handling of shocks, settings for the shock absorbers are different for different centers of gravity Therefore, there is a need for identifying the center of gravity of the rider. Balancing between pedalling efficiency and handling of shocks from the pavement may be accomplished by adjusting the shock absorbers. However, presently there is no product in the market that adjusts the shock absorbers according to the center of gravity of the rider.

### SUMMARY OF THE INVENTION

The invention provides an apparatus for detecting a riding posture to detect a riding posture of a rider riding a bicycle.

An apparatus for detecting a riding posture of the invention is suitable for detecting a riding posture of a rider riding a bicycle. The apparatus for detecting the riding posture includes a sensor and a controller. The sensor is connected to the bicycle to sense a mutual relationship between the rider and the bicycle and output a corresponding sensing signal. The controller receives the sensing signal and determines whether the riding posture of the rider is a sitting posture or a standing posture according to the sensing signal.

Based on the above, the invention determines the riding posture (sitting posture or standing posture) of the rider by using the apparatus for detecting the riding posture. Therefore, the shock absorber settings are allowed to be adjusted by using an automatic control system according to the riding posture. In this way, the pedalling efficiency and the handling of shocks from the pavement may be optimized.

To make the above features and advantages of the invention more comprehensible, embodiments accompanied with drawings are described in detail as follows.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1A is a side view illustrating a bicycle to which the invention is applied.
FIG. 1B and 1C are respectively schematic views illustrating a rider riding the bicycle shown in FIG. 1A in a sitting posture and a standing posture.
FIG. 2 is a side view illustrating an apparatus for detecting a riding posture according to an embodiment of the invention applicable to the bicycle.
FIG. 3A and FIG. 3B are respectively a side view and a top view illustrating an apparatus for detecting a riding posture according to another embodiment of the invention applicable to the bicycle.
FIG. 4A and FIG. 4B are respectively a side view and a top view illustrating an apparatus for detecting a riding posture according to another embodiment of the invention applicable to the bicycle.
FIG. 5 is a bottom view illustrating an apparatus for detecting a riding posture according to another embodiment of the invention applicable to the bicycle.
FIG. 6A and FIG. 6B are respectively a side view and a top view illustrating an apparatus for detecting a riding posture according to another embodiment of the invention applicable to the bicycle.
FIG. 7A and FIG. 7B are respectively a side view and a top view illustrating an apparatus for detecting a riding posture according to another embodiment of the invention applicable to the bicycle.
FIG. 8 is a side view illustrating an apparatus for detecting a riding posture according to another embodiment of the invention applicable to the bicycle.
FIG. 9 is a side view illustrating an apparatus for detecting a riding posture according to another embodiment of the invention applicable to the bicycle.
FIG. 10 is a side view illustrating an apparatus for detecting a riding posture according to another embodiment of the invention applicable to the bicycle.
FIG. 11 is a side view illustrating an apparatus for detecting a riding posture according to another embodiment of the invention applicable to the bicycle.
FIG. 12 is a bottom view illustrating an apparatus for detecting a riding posture according to another embodiment of the invention applicable to the bicycle.
FIG. 13 is a side view illustrating an apparatus for detecting a riding posture according to another embodiment of the invention applicable to the bicycle.
FIG. 14 is a side view illustrating an apparatus for detecting a riding posture according to another embodiment of the invention applicable to the bicycle.
FIG. 15 is a side view illustrating an apparatus for detecting a riding posture according to another embodiment of the invention applicable to the bicycle.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

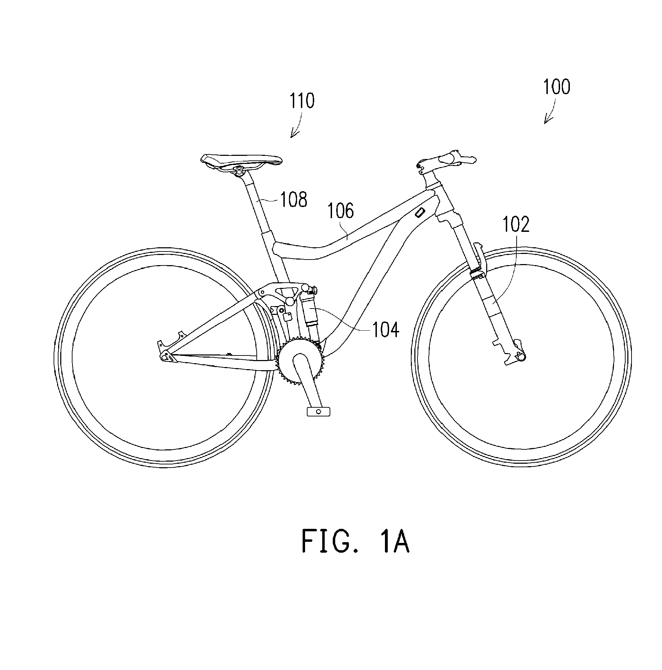

Referring to FIG. 1A, a bicycle 100 of the embodiments of the invention includes a plurality of shock absorbers 102 and 104. The shock absorbers 102 and 104 may be controlled by an automatic control system (not depicted) to adjust shock absorbing effects of the shock absorbers 102 and 104. In addition, the bicycle 100 includes a frame 106, a saddle post 108 and a saddle 110. The saddle post 108 is assembled to the frame 106, and the saddle 110 is assembled to a top end of the saddle post 108 for the rider to ride.

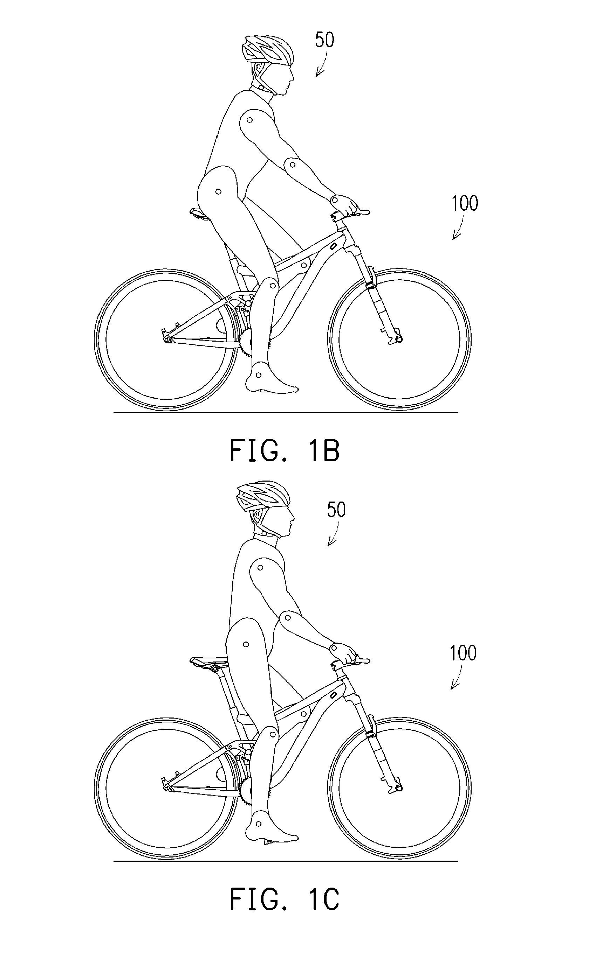

Referring to FIG. 1B and FIG. 1C, when riding the bicycle 100, a rider 50 may adopt a sitting posture as in FIG. 1B or a standing posture as in FIG. 1C to ride the bicycle 100 according to different pavements. The two riding postures result in different overall centers of gravity of the bicycle 100. Due to the different centers of gravity of the bicycle 100, settings for the shock absorbers 102 and 104 are different so as to optimize pedalling efficiency and handling of shocks from the pavement. Therefore, in the following, a plurality of embodiments of the apparatus for detecting a riding posture are provided to detect the riding posture of the rider 50 when riding the bicycle 100.

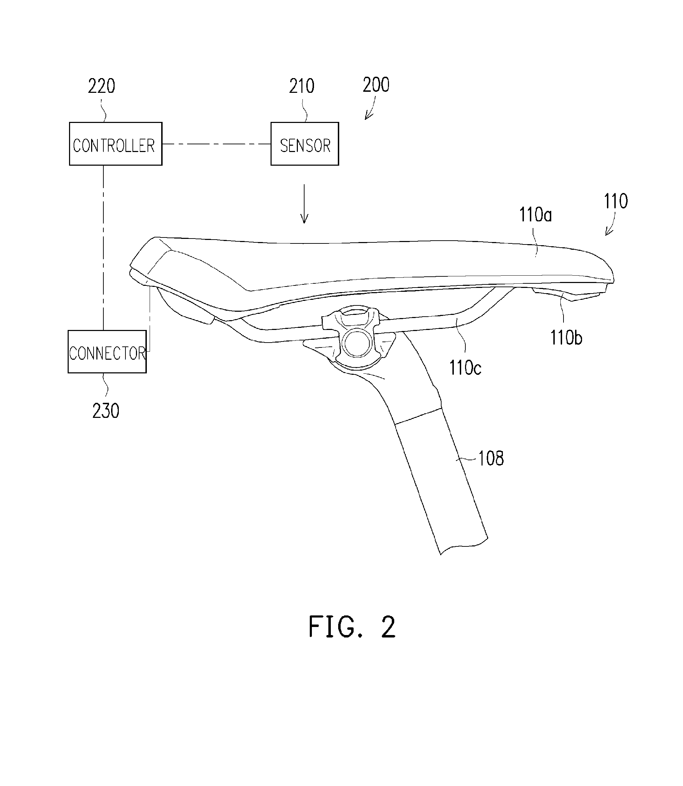

Referring to FIG. 1A to FIG. 1C and FIG. 2, in this embodiment, an apparatus 200 for detecting a riding posture includes a sensor 210 and a controller 220. The sensor 210 is suitable to be connected to the bicycle 100 to sense a mutual relationship between the rider 50 and the bicycle 100 and output a corresponding sensing signal. The controller 220 receives the sensing signal and determines whether the riding posture of the rider 50 is the sitting posture as in FIG. 1B or the standing posture as in FIG. 1C according to the sensing signal. In this embodiment, the controller 220 may transceive signals with the automatic control system of the bicycle 100 in a wired manner or wirelessly, so as to allow the automatic control system to adjust the settings of the shock absorbers 102 and 104 according to the riding posture (sitting posture or standing posture) of the rider 50.

Referring again to FIG. 1A and FIG. 2, the apparatus 200 for detecting the riding posture further includes a connector 230. The connector 230 is disposed between the controller 220 and the bicycle 100. The controller 220 is connected to the bicycle 100 through the connector 230. The connector 230 is a screw lock connector, a snap connector or a magnetic connector. Therefore, structurally, the controller 220 may be screw locked, snap connected or magnetically attached to the bicycle 100, such as to the saddle 110 or other parts of the bicycle 100, by using the connector 230.

In the embodiments below, different types of sensors and parts of the bicycle where the sensor is disposed are described with detail.

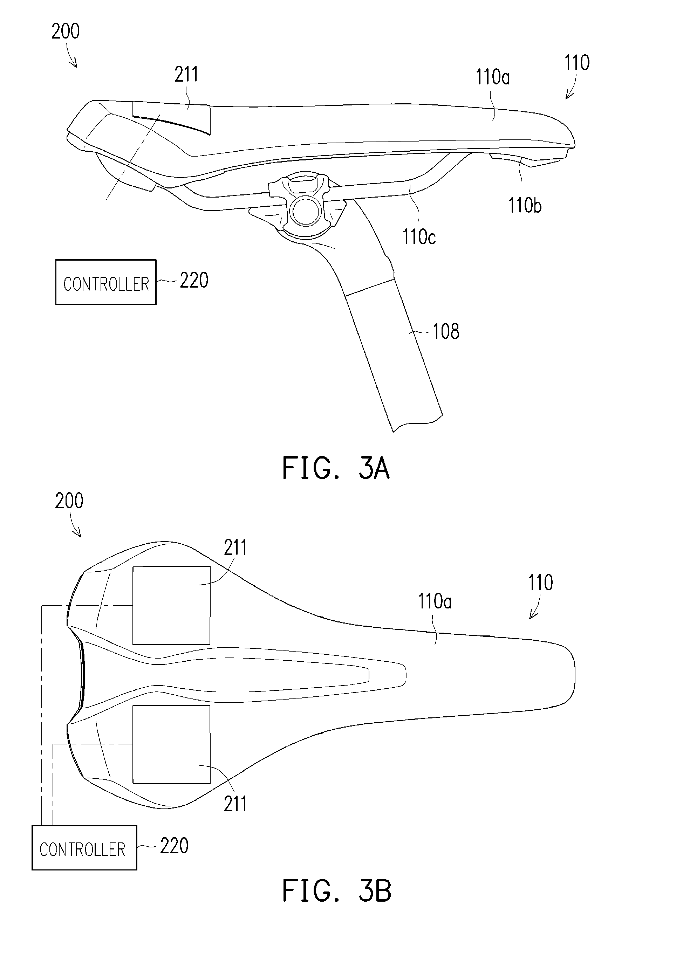

Referring to FIG. 3A and FIG. 3B, in this embodiment, the apparatus 200 for detecting the riding posture includes a pair of sensors 211 and a controller 220 coupled to the sensors 211. Each of the sensors 211 is a piezoresistive sensor (i.e. a type of pressure sensor), and disposed in the saddle 110 at the top of the saddle, so as to sense a pressure that the saddle 110 receives. Therefore, when the rider sits on the saddle 110 and exerts a pressure on the saddle 110, the controller 220 may determine whether the rider sits on the saddle 110 according to variation in resistance of the sensor 211 (i.e. the piezoresistive sensor). In this embodiment, the pair of sensors 211 (i.e. piezoresistive sensors) are disposed at the top part of the saddle 110.

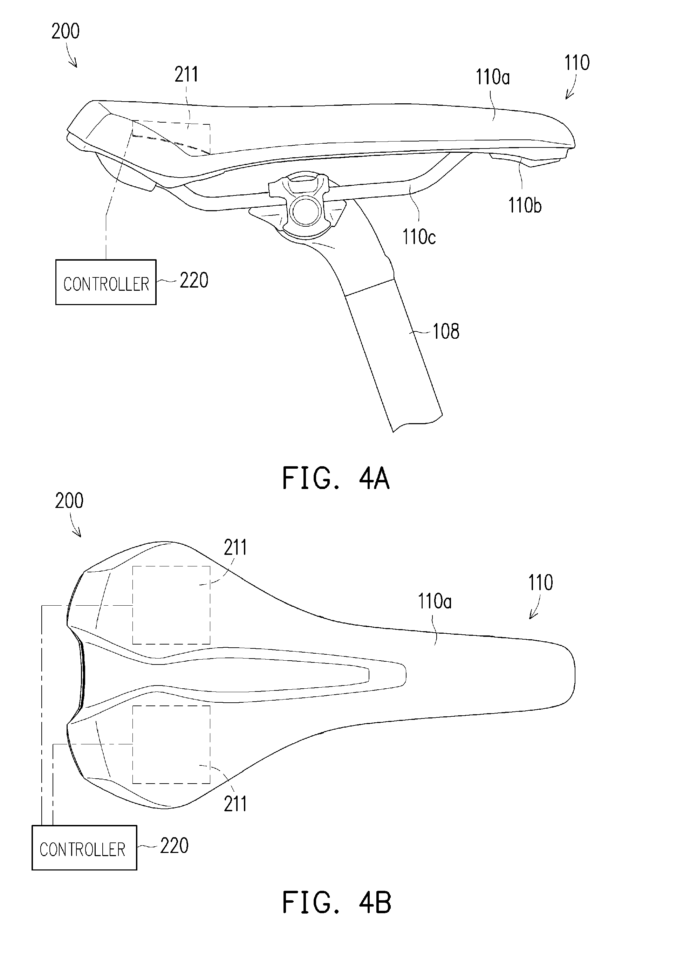

Referring to FIG. 4A and FIG. 4B, similar to the embodiment of FIG. 3A and FIG. 3B, in the embodiment of FIG. 4A and FIG. 4B, the pair of sensors 211 are disposed inside the saddle 110.

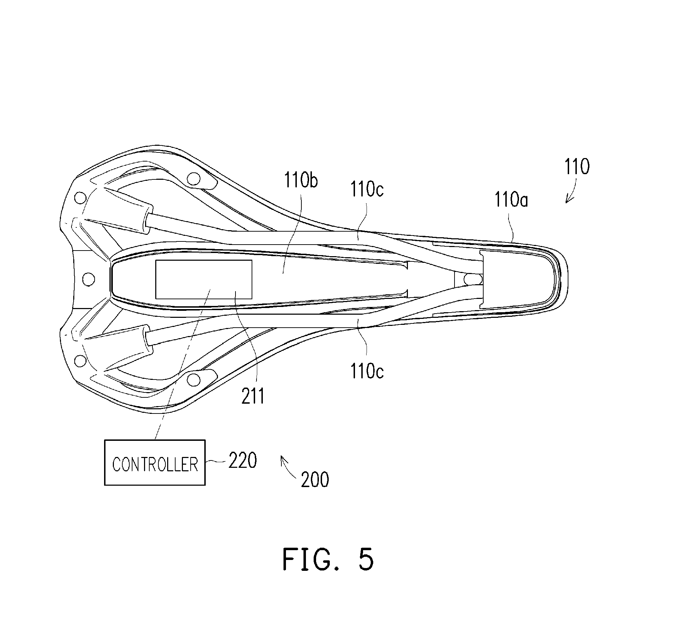

Referring to FIG. 5, similar to the embodiment of FIG. 3A and FIG. 3B, in the embodiment of FIG. 5, the sensor 211 may be disposed at a bottom case 110b of the saddle 110, and may produce the variation in resistance due to variation in pressure caused by attaching another object to the sensor 211 (i.e. piezoresistive sensor), or produce the variation in resistance by deformation of the sensor 211 (i.e. piezoresistive sensor) itself. When the rider sits on the saddle 110 to deform the bottom case 110b, the controller 220 may determine whether the rider sits on the saddle 110 according to the variation in resistance of the sensor 211.

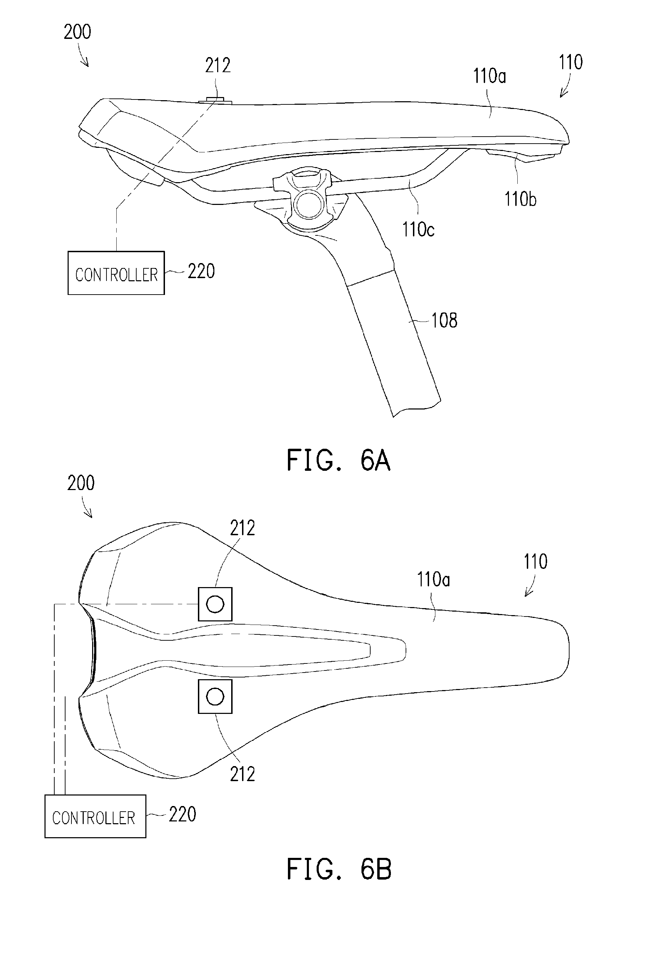

Referring to FIG. 6A and FIG. 6B, in this embodiment, the apparatus 200 for detecting the riding position includes the pair of sensors 212 and the controller 220 coupled to the sensor 212. Each of the sensors 212 is a contact switch (i.e. another type of pressure sensor), and is disposed in the saddle 110 to sense the pressure that the saddle 110 receives. Therefore, when the rider sits on the saddle 110 and exerts a pressure on the saddle 110, the controller 220 may determine whether the rider sits on the saddle 110 according to whether the sensor 212 (i.e. contact switch) is triggered. In this embodiment, the pair of sensors 212 (i.e. contact switches) are disposed at the top of the saddle 110.

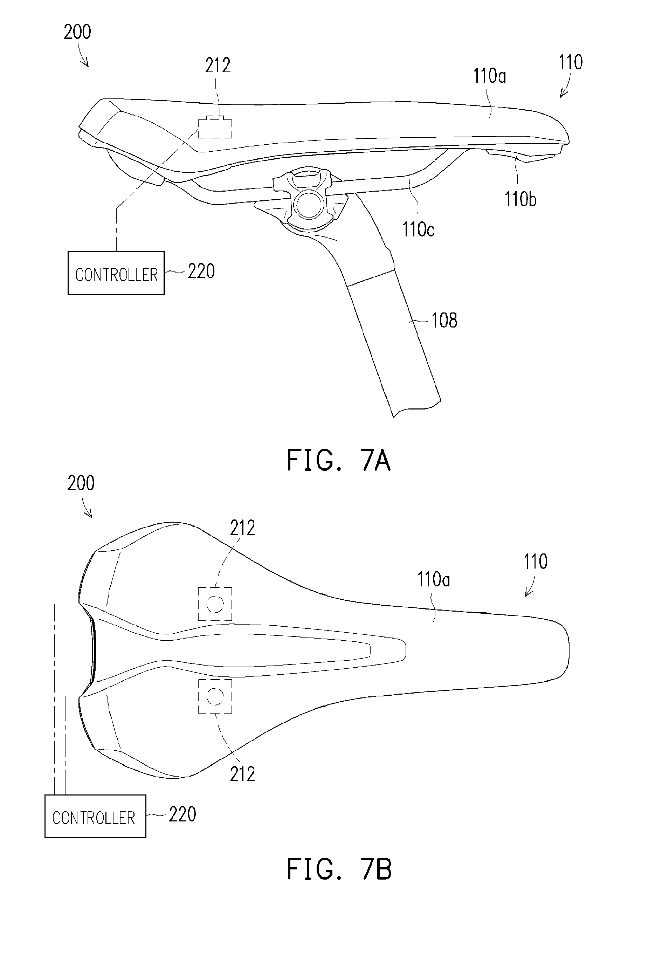

Referring to FIG. 7A and FIG. 7B, similar to the embodiment of FIG. 6A and FIG. 6B, in the embodiment of FIG. 7A and FIG. 7B, the pair of sensors 212 (i.e. contact switches) are disposed inside the saddle 110.

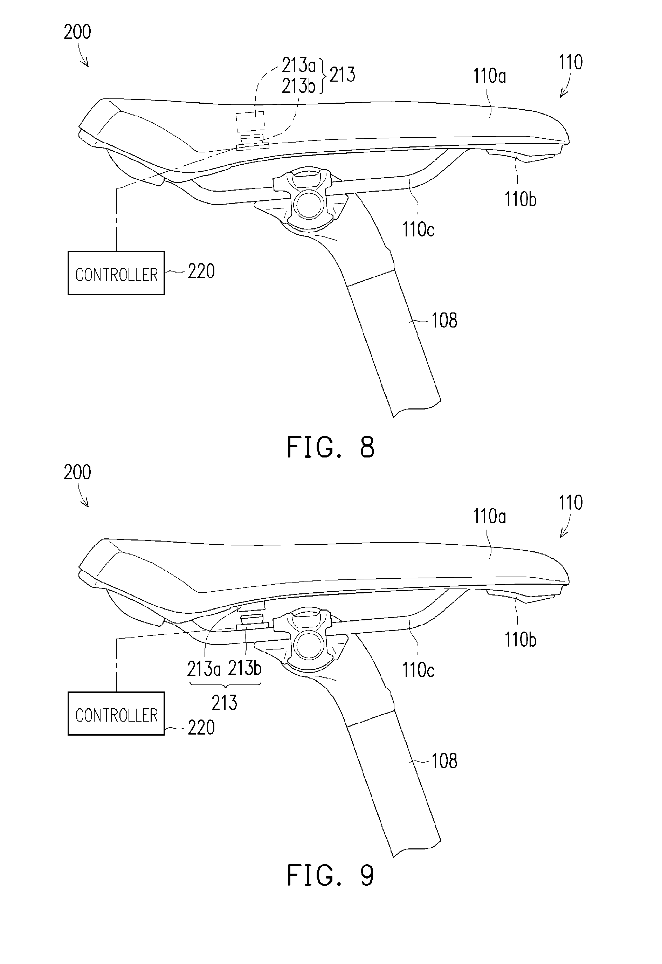

Referring to FIG. 8, in this embodiment, the apparatus 200 for detecting the riding posture includes a sensor 213 and the controller 220 coupled to the sensors 213. The sensor 213 is a distance sensor, and is disposed in the saddle 110 to sense a squeeze force received by the saddle 110. Specifically, the sensor 213 has a magnetic body 213a and a magnetic sensing component 213b (e.g. a hall sensor). The magnetic sensing component 213b is able to sense a change in a magnetic field of the magnetic body 213a. Therefore, when the saddle 110 receives a squeeze, a distance between the magnetic body 213a and the magnetic sensing component 213b changes, and a strength of the magnetic field produced by the magnetic body 213a that is sensed by the magnetic sensing component 213b changes accordingly. Thus, when the rider sits on the saddle 110 to squeeze the saddle 110, the controller 220 may determine whether the rider sits on the saddle 110 according to the change in the strength of the magnetic field produced by the magnetic body 213a that is sensed by the magnetic sensing component 213b. In this embodiment, the magnetic body 213a and the magnetic sensing component 213b are respectively located at a soft lining 110a and at the bottom case 110b.

Referring to FIG. 9, similar to the embodiment of FIG. 8, in the embodiment of FIG. 9, the magnetic body 213a and the magnetic sensing component 213b are respectively located at the bottom case 110b and a seat rail 110c of the saddle 110.

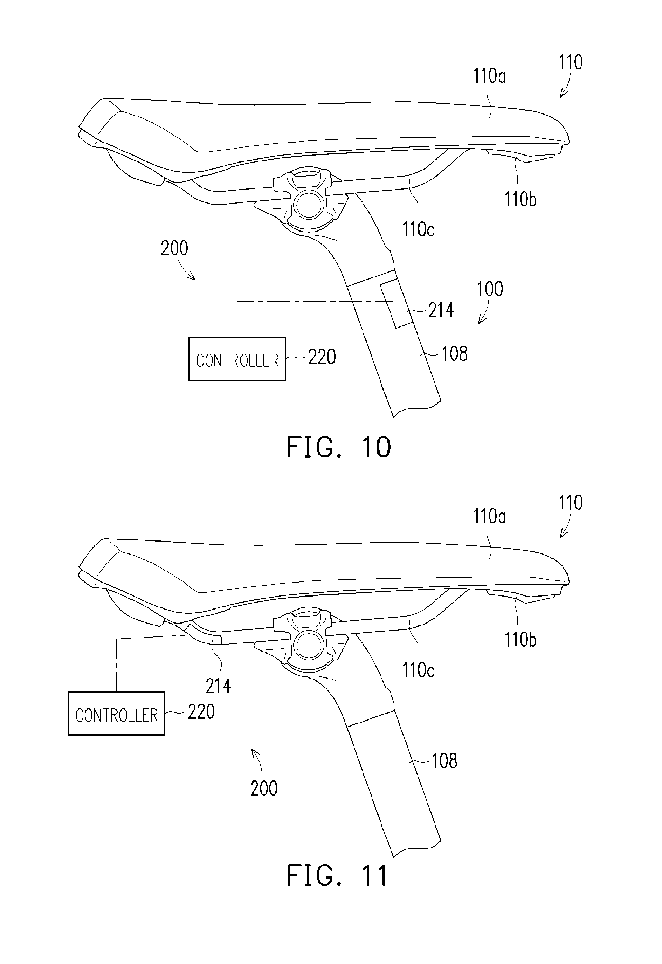

Referring to FIG. 1A and FIG. 10, in this embodiment, the apparatus 200 for detecting the riding posture includes a sensor 214 and the controller 220 coupled to the sensor 214. The sensor 214 is a strain sensor (i.e. strain gauge), and is disposed on the saddle post 108 to detect deformation in the saddle post 108. The strain gauge may test a strain of an object by receiving the variation in resistance produced by a mechanical strain. Therefore, when the rider sits on the saddle 110 to deform the saddle post 108, the controller 220 may determine whether the rider sits on the saddle 110 according to the variation in resistance of the sensor 214 (i.e. strain gauge).

Referring to FIG. 11, similar to the embodiment of FIG. 10, in the embodiment of FIG. 11, the sensor 214 (i.e. strain gauge) is disposed on the seat rail 110c of the saddle 110 to sense the deformation of the seat rail 110c. Therefore, when the rider sits on the saddle 110 to deform the seat rail 110c, the controller 220 may determine whether the rider sits on the saddle 110 according to the variation in resistance of the sensor 214 (i.e. strain gauge).

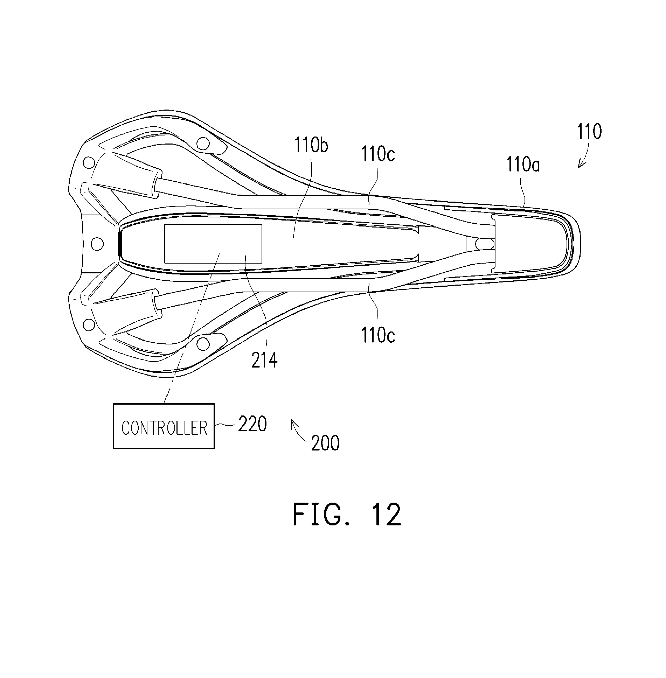

Referring to FIG. 12, similar to the embodiment of FIG. 10, in the embodiment of FIG. 12, the sensor 214 (i.e. strain gauge) is disposed at the bottom case 110b of the saddle 110 to sense the deformation of the bottom case 110b. Therefore, when the rider sits on the saddle 110 to deform the bottom case 110b, the controller 220 may determine whether the rider sits on the saddle 110 according to the variation in resistance of the sensor 214 (i.e. strain gauge).

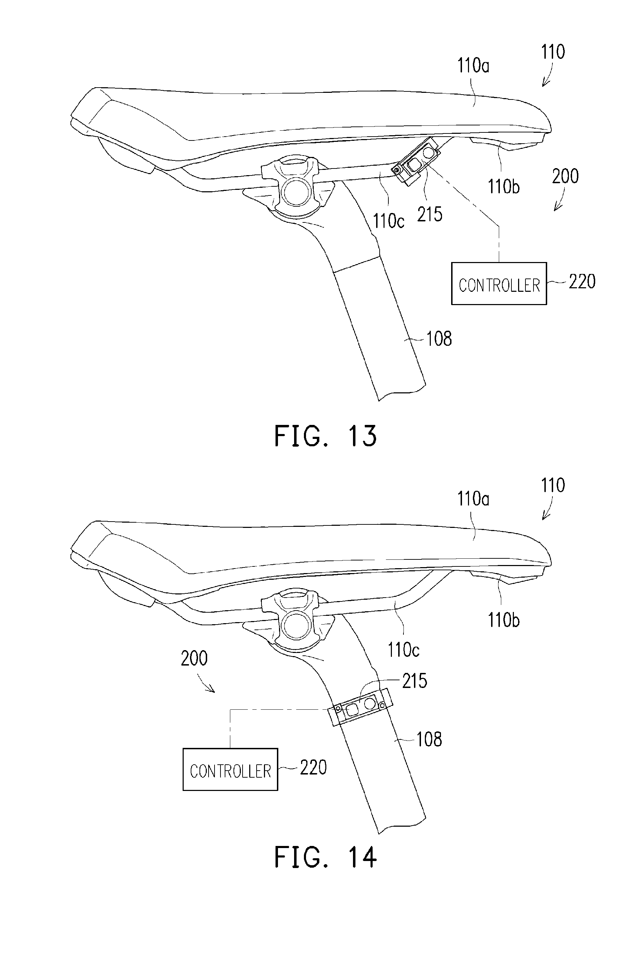

Referring to FIG. 1A and FIG. 13, in this embodiment, the apparatus 200 for detecting the riding posture includes a sensor 215 and the controller 220 coupled to the sensor 215. The sensor 215 is an optical sensor (e.g. an infrared sensor), and is disposed on the bicycle 100 to sense a movement of an object close to the saddle 110. Therefore, when the rider adopts the sitting posture as the riding posture, the controller 220 may determine whether the rider sits on the saddle 110 according to whether the sensor 215 continuously senses that the rider's hip or thigh is close the saddle 110. In this embodiment, the sensor 215 is disposed at the seat rail 110c.

Referring to FIG. 14, similar to the embodiment of FIG. 13, in the embodiment of FIG. 14, the sensor 215 (i.e. optical sensor) is disposed on the saddle post 108 to sense the movement of the object close to the saddle 110. Therefore, when the rider adopts the sitting posture as the riding posture, the controller 220 determines whether the rider sits on the saddle 110 according to whether the sensor 215 continuously senses that the rider's hip or thigh is close to the saddle 110.

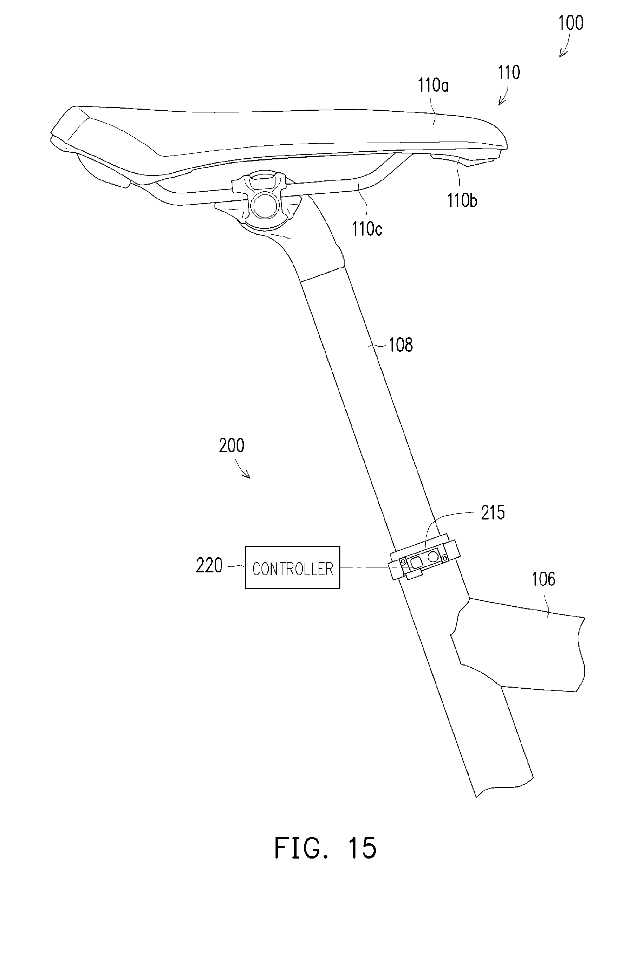

Referring to FIG. 15, similar to the embodiment of FIG. 13, in the embodiment of FIG. 15, the sensor 215 (i.e. optical sensor) is disposed on the frame 106 of the bicycle 100, so as to sense the movement of the object close to the saddle 110. Therefore, when the rider adopts the sitting posture as the riding posture, the controller 220 may determine whether the rider sits on the saddle 110 according to whether the sensor 215 continuously senses that the rider's hip or thigh is close to the saddle 110.

Based on the above, in the invention, the riding posture (sitting posture or standing posture) of the rider may be determined using the apparatus for detecting the riding posture. Therefore, the settings of the shock absorbers may be adjusted by the automatic control system according to the riding posture. In this way, the pedalling efficiency and the handling of shocks from the pavement may be optimized.

## Claims

1. An apparatus for detecting a riding posture of a rider (50) riding a bicycle (100), comprising:
a sensor (210∼215), connected to the bicycle (100) and configured to sense information about a relationship between the rider (50) and the bicycle (100) and output a corresponding sensing signal; and
a controller (220) that receives the sensing signal, the controller (220) determines whether the riding posture of the rider (50) is a sitting posture or a standing posture based on the sensing signal.

2. The apparatus for detecting the riding posture as claimed in claim 1, further comprising:
a connector (230), disposed between the controller (220) and the bicycle (100), wherein the controller (220) is connected to the bicycle (100) through the connector (230).

3. The apparatus for detecting the riding posture as claimed in claim 2, wherein the connector (230) is one of a lock screw connector, a snap connector and a magnetic connector.

4. The apparatus for detecting the riding posture as claimed in claim 1, wherein the sensor (210∼215) is a pressure sensor and is disposed in a saddle (110) of the bicycle (100) to sense a pressure received by the saddle (110).

5. The apparatus for detecting the riding posture as claimed in claim 4, wherein the pressure sensor is a piezoresistive sensor.

6. The apparatus for detecting the riding posture as claimed in claim 4, wherein the pressure sensor is a contact switch.

7. The apparatus for detecting the riding posture as claimed in claim 4, wherein the sensor (210∼215) is disposed at a top of the saddle (110).

8. The apparatus for detecting the riding posture as claimed in claim 4, wherein the sensor (210∼215) is disposed at a bottom case (110b) of the saddle (110).

9. The apparatus for detecting the riding posture as claimed in claim 4, wherein the sensor (210∼215) is disposed in the saddle (110).

10. The apparatus for detecting the riding posture as claimed in claim 1, wherein the sensor (210∼215) is a distance sensor and is disposed in a saddle (110) of the bicycle (100) to sense a squeeze force received by the saddle (110).

11. The apparatus for detecting the riding posture as claimed in claim 10, wherein the sensor (210∼215) comprises a magnetic body (213a) and a magnetic sensing component (213b), and the magnetic sensing component (213b) senses a change in a magnetic field of the magnetic body (213a).

12. The apparatus for detecting the riding posture as claimed in claim 11, wherein the magnetic body (213a) and the magnetic sensing component (213b) are respectively located at a soft lining (110a) and a bottom case (110b) of the saddle (110).

13. The apparatus for detecting the riding posture as claimed in claim 11, wherein the magnetic body (213a) and the magnetic sensing component (213b) are respectively located at a bottom case (110b) and a seat rail (110c) of the saddle (110).

14. The apparatus for detecting the riding posture as claimed in claim 1, wherein the sensor (210∼215) is a strain sensor and is disposed on a saddle post (108) of the bicycle (100) to sensing deformation of the saddle post (108).

15. The apparatus for detecting the riding posture as claimed in claim 1, wherein the sensor (210∼215) is a strain sensor and is disposed on a seat rail (110c) of a saddle (110) of the bicycle (100) to sense deformation of the seat rail (110c).

16. The apparatus for detecting the riding posture as claimed in claim 1, wherein the sensor (210∼215) is a strain sensor and is disposed on a bottom case (110b) of a saddle (110) of the bicycle (100) to sense deformation of the bottom case (110b).

17. The apparatus for detecting the riding posture as claimed in claim 1, wherein the sensor (210∼215) is an optical sensor and is disposed on the bicycle (100) to sense a movement of an object close to the saddle (110).

18. The apparatus for detecting the riding posture as claimed in claim 17, wherein the optical sensor is an infrared sensor.

19. The apparatus for detecting the riding posture as claimed in claim 17, wherein the sensor (210∼215) is disposed at a seat rail (110c) of a saddle (110) of the bicycle (100).

20. The apparatus for detecting the riding posture as claimed in claim 17, wherein the sensor (210∼215) is disposed at a saddle post (108) of the bicycle (100).

21. The apparatus for detecting the riding posture as claimed in claim 17, wherein the sensor (210∼215) is disposed at a frame (106) of the bicycle (100).

22. A method for detecting a riding posture of a rider (50) riding a bicycle (100), comprising:
sensing information about a position of the rider (50) in relation to the bicycle (100); and
determining whether the riding posture of the rider (50) is a sitting posture or a standing posture based to the sensed information.

23. The method of claim 22, wherein:
the sensing information includes detecting pressure on a seat of the bicycle (100).

24. The method of claim 22, wherein:
the sensing information includes detecting a change in a magnetic field..

25. The method of claim 22, wherein:
the sensing information includes detecting deformation of a component of the bicycle (100).

26. The method of claim 22, wherein:
the sensing information includes optically detecting movement of the rider.
